Europäisches Patentamt

(19) European Patent Office (11) Publication number: **0 087 496**

Office européen des brevets **B1**

(12) **EUROPEAN PATENT SPECIFICATION**

(45) Date of publication of patent specification: **30.10.85** (51) Int. Cl.⁴: **C 04 B 14/48, B 23 P 17/06**

(21) Application number: **82107124.8**

(22) Date of filing: **06.08.82**

(54) **Steel fibers for reinforcing concrete.**

(30) Priority: **03.03.82 JP 33228/82**

(43) Date of publication of application:
**07.09.83 Bulletin 83/36**

(45) Publication of the grant of the patent:
**30.10.85 Bulletin 85/44**

(84) Designated Contracting States:
**AT BE CH DE FR GB IT LI LU NL SE**

(56) References cited:
**DE-A-2 359 367**
**DE-A-2 904 288**
**FR-A-2 292 684**
**US-A-4 298 660**

(73) Proprietor: **Aida Engineering Ltd.**
**No. 2-10, Ooyama-cho Sagamihara-shi**
**Kanagawa-ken**
**Tokyo/Japan (JP)**

(72) Inventor: **Tezuka, Yoshitomo**
**No. 83-7, Suwa-machi**
**Hachioji-shi Tokyo (JP)**

(74) Representative: **von Bezold, Dieter, Dr. et al**
**Patentanwälte Dr. D. von Bezold, Dipl.-Ing. P.**
**Schütz, Dipl.-Ing. W. Heusler Maria-Theresia-**
**Strasse 22 Postfach 86 02 60**
**D-8000 München 86 (DE)**

**Description**

The present invention relates to steel fibers for reinforcing concrete, and more particularly to improved steel fibers which are produced by directly cutting a steel block.

It is known to mix short steel fibers into liquid concrete in order to improve the rigidity and the tensile strength of the concrete. Various kinds of steel fibers for reinforcing concrete are known, and typical representatives thereof are:

1) wire fibers made by cutting rolled and drawn steel wire to predetermined length;

2) sheared fibers made by cutting with a rotary edge a coiled material or slitting a cold rolled steel sheet;

3) melt extraction fibers made by rotating a water cooled disc on the surface of molten steel for instantaneously solidifying and splashing the molten steel by centrifugal force;

4) cut fibers made by cutting a thick steel plate or block.

Concrete reinforcing steel fibers, in the following shortly called "steel fibers" or simply "fibers", are required in mass production quantities at economical costs because of the large amounts needed, and must have sufficient strength (tensile strength) and suitable adhesive strength to the concrete. In this regard, the above mentioned 3rd type of steel fibers has the advantage of low production costs because it is produced directly from molten steel but is difficult to implement due to difficulties in controlling the temperature of the molten steel and the surface control, and further has the drawback of poor tensile strength.

Steel fibers of the 1st and 2nd type are superior in the strength characteristics over fibers of the 3rd type, but are expensive since the raw materials have a high processing degree, and the adhering strength is unsatisfactory because of their smooth circular or rectangular cross section. For avoiding these drawbacks, the fibers are partially made uneven by means of physical working or bent a both ends, but in spite of such measures, satisfactory effects could not be obtained since lubricants used at production of the raw material remains on the fiber surfaces. When such fibers are scattered into the concrete they may cause cracks in the concrete due to the so-called notch effect.

The production of steel fibers of the 4th type by machining a thick steel plate or block is known from US—A—4298660 and DE—A—2994288. In the known method, a milling cutter having a plurality of cutting edges is positioned on the steel plate or block and is moved relatively in the horizontal direction. A surface of said plate or block is machined by the rotating cutting edges to chop steel fibers of approximate triangular form in cross-section. The fibers may have a mountain-like shape in cross-section, and they may be twisted in their length direction. According to this method, steel fibers of high quality may be economically produced, and since these fibers have a rough surface without notches, the adhering strength is satisfactory. As they are subject to large elastic deformation during production, also their strength is sufficient due to work hardening. Therefore these cut fibers of the 4th type as a whole excel the fibers of the 1st, 2nd and 3rd type.

In addition to the above mentioned requirements to be fulfilled by the steel fibers, workability or handling properties should be taken into consideration. "Workability" means herein that fluidity of the fibers is smooth at packing, wrapping or dispensing, that the fibers do not form aggregates or lumps, that they are uniformly dispersed when mixed with cement, aggregates and other components in a concrete mixer, and that they are not bent or broken during the mixing process.

Concerning the workability, the steel fibers of the 1st, 2nd and 3rd tpye get entangled to each other at packing into or taking out from a box, and are particularly prone to form so called fiber balls. For removing such conditions, a troublesome disentangling process is required, or special means as a separator often must be provided for in practice. Further, the mixing load is large due to bad dispersion, so that the mixing time is long, and clogging occurs in the machine or dispensing hose, resulting in loss of time and process for setting or disassembling. Since the dispersion in the concrete is not uniform, the required strength of the final set concrete is not secured.

The steel fibers of the 4th type are indeed preferred over those of the 1st, 2nd and 3rd type in respect to the production cost, the quality and other features, but in the actual practice these steel fibers are either satisfactory in respect to the reinforcing strength or in respect to the workability, but not in both. Specifically, if the fibers are too thin or too long, bending or breaking occur and cause aggregates, lumps and other inconveniences so that the reinforcing effect is extremely reduced, or if they are too thick in cross section, the adhesive property is reduced so that the steel fibers precipitate down to the lower part of the concrete.

The aim of the present invention is to avoid the difficulties mentioned above encountered with the known steel fibers.

A basic object of the invention is to provide steel fibers for reinforcing concrete, which exhibit the required reinforcing effect and excellent workability.

Another object of the invention is to provide steel fibers which are smooth in their fluidity without getting entangled to each other, and easy in packing or wrapping, and may be added as bulk or lump without the necessity of a special machine such as a separator. Since the fibers are rapidly dispersed uniformly and exhibit high workability and working efficiency, the load of the mixer is low and, thus, the required power is reduced.

**0 087 496**

A further object of the invention is to provide steel fibers which have spring properties. If a bending moment is applied to a fiber during mixing or taking out into a dispenser nozzle or hose, the fiber returns to its original shape and does not form a fiber ball nor clogs the nozzle or hose.

Another object of the invention is to provide steel fibers which are excellent in respect to their adhesive property due to the balance between smooth surface portions and rough surface portions, thereby to increase the reinforcing effect. The rigidity and fluidity of the steel fibers is increased by controlling the shapes in size, instead of making the aspect ratio small, so that the weight is not unnecessarily increased and a large number of fibers may be mixed into a given unit of concrete, and concrete or mortar products of high strength can be produced at high efficiency.

For accomplishing the above mentioned objects, studies of the relationship between the shape, size, reinforcing effect and workability have been made. With respect to the present kind of steel fibers, one of the most important characteristics is the tensile strength (i.e., the maximum tension which does not cause rupture of the concrete reinforced by admixed steel fibers). The prior art has paid attention only to the tensile strength when determining the sizes and the shapes of the steel fibers. With respect to the fiber · length L, diameter d, and adhering strength of the concrete, the tensile strength σf was expressed with the expression of "σf=L/d". L/d, i.e., the aspect ratio was regarded as the parameters for determining the fiber sizes.

However, depending upon the investigations on which this invention is based, it has been proved that the workability and the reinforcing effect could not be matched satisfactorily by variation of the parameters of the aspect ratio and the shape and size thereof.

As a result, investigations have revealed that the requirements with respect to the reinforcing effect and the workability could both be satisfied by making the basic shape of the cut steel fiber flat, and the most effective measure was to select the degree of flatness within a certain range.

The present steel fibers are made by cutting such that the following parameters are:

Length L between 20 mm and 40 mm, flatness index N (width W/thickness t) between 7 and 9, w = 1.5 to 2.5 mm and t = 0.2 to 0.3 mm.

By this means, the fluidity of the fibers per se is excellent and advantageous at wrapping, packing or taking out smoothly without forming balls. Further, the steel fibers are uniformly dispersed into the liquid concrete. The fibers are given moderate hardness, elasticity and required resiliency. If a strong bending moment acts on a fiber, it easily recovers to its original shape due to the elasticity without being bent or broken or clogging in a dispenser hose, and the present fibers have excellent adhesion to the concrete and do not settle down in the fluid concrete.

Preferred embodiments of the invention are described with reference to the attached drawing.

Fig. 1 is a perspective view showing one example of a steel fiber according to the invention;

Fig. 2 is an enlarged cross sectional view of the fiber shown in Fig. 1;

Fig. 3 is a perspective view showing another example of the invention,

Fig. 4 is an enlarged cross sectional view of the fiber shown in Fig. 3, and

Fig. 5 is a perspective view showing a further example of the invention.

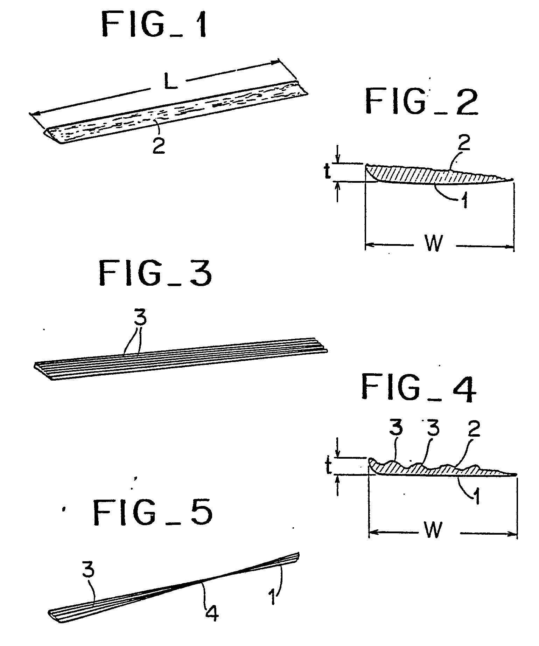

Figs. 1 to 4 show examples of steel fibers according to the present invention, which are generally flat, and may have a cross section of crescent shape (Fig. 1 and 2) or of mountain and valley (corrugated) shape (Figs. 3 and 4). The fibers have a smooth face 1 curved in the direction of width W and a rough face 2 similar to pear skin as shown in Fig. 2, or a face formed with furrows or wrinkles 3 running in the length direction L on the rough face 2, said furrows forming said mountain like configuration shown in Fig. 3. Fig. 5 shows another example of the invention which is twisted in the length direction of the fiber.

Each of the steel fibers mentioned above is produced by cutting a steel block on a surface thereof, such as a continuously cast slab or ingot by means of a rotary cutter having a plurality of cutting edges at least approximately parallel to the length direction of the fibers, the cutting direction being essentially normal to the length direction of the fibers. If the cutting direction were along the axial direction of the fiber, notches would be formed in right angle to the axial direction of the fiber, that is, in the width, and the reinforcing effect would be decreased.

The steel fiber of the invention depends upon such cutting and is flat in shape satisfying the conditions mentioned below which are regarded as essential to preferred embodiments of the invention.

1) L = 20 to 40 mm
2) N = W/t = 7 to 9,
herein W = 1,5 to 2,5 mm and t = 0,2 to 0,3 mm,
wherein
L is the length of the fiber,
W is the width,
t is the thickness (the maximum thickness) and
N = W/t is the flatness index.

A basic condition of the fibers according to the invention is that the entire body is flat. Generally, it has been considered previously that the steel fibers should be acicular or needle-shaped as seen in chopped fibers or cut wire fibers. Acicular shaped means that the cross section is a circle or a polygon of which each

3

of the sides is of the same length. The known cut fibers meet this conception, as the width and thickness of these fibers were equal rather than being flat as the said above fibers.

However, it has been found that the area of the smooth face of such fibers is relatively small and that of the rough parts is relatively large. Accordingly, the fiber resistance when touching each another is increased and the fibers easily twine by increasing of the area of the rough surface and the equal shapes of the width and the thickness of the fibers. Further, being of needle shape, the fiber lacks restoration with respect to bending which decreases the workability owing to forming of fiber balls, and the reinforcing effect. In order to improve these matters the conventional technique has been to make the cross section large or the aspect ratio small, but since the steel fibers are mixed into the concrete on a standard of weight of the fibers, the admixed amount of fibers per unit of concrete is decreased, whereby the adhering strength of the single fiber is decreased so that the reinforcing effect was not as high as expected. If the admixed proportion were increased, the fibers get caught to each other to form fiber balls and do not form an even dispersion because they settle down.

In view of such practices, the present invention specifies that the basic shape of the steel fiber is flat, especially the smooth face 1 (Fig. 2) is a long side in the cross section, and the length L being between 20 to 40 mm. Length less than 20 mm is too short and if the above condition 2) were satisfied, the adhesion and desired reinforcing effect would be reduced, thus the desired tensile strength would not be obtained. A length of more than 40 mm makes the adhesion excellent and increases the tensile strength, but would decrease rigidity of the fiber owing to the relation between the width W and the thickness t, and the fibers lack firmness so that they tend to break or bend at packing or mixing, or they make bridgings in a dispenser nozzle, hose and the like at blowing or dispensing.

Thus the length should be between about 20 to 40 mm. However, the characteristics of the desired strength for the reinforcing steel fibers and the workability could not be satisfactorily harmonized if the fiber were only flat. That is, if the fiber was too flat, it would be weakened when it is agitated in the concrete because hardness is wanted. The fibers then would tend to form fiber balls, and provide insufficient reinforcing effect since their tensile strength is low. Contrarily, if the fibers are not flat enough, there would arise problems with respect to the workability and the reinforcing effect.

Experiments have been carried out for establishing the proper range of the flatness index. The raw material used was a continuously cast billet or slab of low carbon steel (C: 0.04%, P: 0.005%, S: 0.006%, Si: 0.04%, Mn: 0.30%, the rest being Fe and inavoidable impurities). This slab was machined with a plane milling cutter having cemented carbide chips to produce flat steel fibers whose basic shapes were as shown in Fig. 3 having L = 30 mm, W = 2 mm and t being of eight types (A—H).

## TABLE 1

| Type | t (mm) | N | Tensile Strength $(Kg/cm^2)$ | Tensile Strength $(N/mm^2)$ | b | c | d | e | f |
|------|--------|-----|------|------|--------|---------|-----|---------|-----------|
| A | 0.10 | 20 | 70 | 6,8 | narrow | clod | — | present | present |
| B | 0.15 | 13 | 80 | 7,8 | ,, | ,, | + | ,, | ,, |
| C | 0.20 | 10 | 89 | 8,7 | middle | ,, | + | ,, | ,, (small) |
| D | 0.22 | 9 | 91 | 8,9 | wide | uniform | ++ | absent | absent |
| E | 0.25 | 8 | 94 | 9.2 | ,, | ,, | ++ | ,, | ,, |
| F | 0.27 | 7,4 | 97 | 9,5 | ,, | ,, | ++ | ,, | ,, |
| G | 0.30 | 6.7 | 100 | 9,8 | middle | clod | — | ,, | ,, |
| H | 0.35 | 5.7 | 102 | 10,0 | narrow | ,, | — | ,, | ,, |

Types A, B, C and H were comparative.

NOTES: ++: very good, +: good, —: maldistributed.

b: size of area of spreading, c: uniformity of distribution of the spreaded fibers,

d: fluidity at mixing, e: bending of the fiber, f: fiber ball formation.

With respect to "scattering" in Table 1, about 200 pieces of the steel fibers each type were at random filled in a box, the box was opened under windless condition at height of 1 m from the ground, and then the spreading and dispersion were measured. For mixing into the concrete, fibers of the same number were mixed under the constant rotation of a ball like mixer. The volume fraction of the steel fibers in the concrete was 1%, and the water/cement ratio was 50%.

As apparent from Table 1, when the flatness index is too large, that is, the thickness is too small, the tensile strength was decreased and the dispersion is not suitable because fiber balls easily form. When the flatness index is small (large thickness), the tensile strength is sufficient but the scattering is not suitable. On the other hand, fibers having a flatness index from 7 to 9, i.e., D, E, F, are excellent with respect to strength and scattering. After addition to the concrete, those fibers are instantly dispersed three-dimensionally and mixed with the aggregates and the cement rapidly without bending or breaking and forming fiber balls. Thus, it is seen that the flatness index is an important factor for the reinforcing steel fibers.

The flatness index has a strong effect on the spring property and the most suitable range is N = 7 to 9. In order to establish this effect, investigations were carried out on the steel fibers D and E by securing their one end, positioning a fulcrum having curvature of 5 mm under the secured portion, effecting a predetermined displacement (angle $\theta$) and mesuring the residual deformation (angle $\theta'$) after releasing. $\theta = 10$ to $30°$ resulted $\theta' = 0°$, $\theta = 45°$ resulted $\theta'$ up to $30°$. On the other hand, if the flatness index was more than 9, the residual deformation was large as $\theta = 10$ to $30°$ resulted $\theta' =$ around $20°$. Conversely, if the flatness index was less than 7 and when $\theta$ was small, $\theta'$ was also small, and when $\theta$ was large, the residual deformation increased rapidly, and the resilience ceased. In the known fiber products (cross section 0.75 mm × 0.75 mm) $\theta = 10°$ resulted in $\theta' = 3°$, $\theta = 30°$ in $\theta' = 25°$, $\theta = 60°$ in $\theta' = 55°$, and $\theta = 90°$ resulted in $\theta' = 85°$.

For the reason of the above circumstances, the invention calls for a specific range of the flatness index, but only with the flatness index, desired results were not always obtained, since an unlimited number of combinations W and t exist. In the course of further investigations, flat steel fibers having various values of W and t have been made, which meet the condition L = 30 mm and the flatness index 7 to 9.

Table 2 shows results of the tests made with these fibers.

## TABLE 2

| | W (mm) | t (mm) | N | g | | j | | | |
| | | | | h | i | k | l | m | n |
|---|---|---|---|---|---|---|---|---|---|
| I | 1.3 | 0.16 | 8.12 | 70 | — | — | Yes | maldis-tributed | Yes |
| J | 1.4 | 0.2 | 7.0 | 77 | — | — | ,, | ,, | ,, |
| K | 1.4 | 0.18 | 7.77 | 73 | — | — | ,, | ,, | ,, |
| L | 1.4 | 0.16 | 8.75 | 71 | — | — | ,, (small) | ,, | ,, |
| M | 1.5 | 0.21 | 7.14 | 80 | ++ | ++ | No | uniform | No |
| N | 1.6 | 0.20 | 8.0 | 81 | ++ | ++ | ,, | ,, | ,, |
| O | 1.5 | 0.18 | 8.3 | 74 | + | + | ,, | almost uniform | ,, |
| P | 2.0 | 0.21 | 7.14 | 89 | ++ | ++ | ,, | uniform | ,, |
| Q | 2.0 | 0.25 | 8.0 | 94 | ++ | ++ | ,, | ,, | ,, |
| R | 2.0 | 0.22 | 9.09 | 92 | ++ | ++ | ,, | ,, | ,, |
| S | 2.4 | 0.30 | 8.0 | 103 | ++ | ++ | ,, | ,, | ,, |
| T | 2.6 | 0.37 | 7.02 | 109 | + | + | ,, (small) | some sinking | ,, |

TABLE 2 (Continued)

| | W (mm) | t (mm) | N | g | | j | | | |
| | | | | h | i | k | l | m | n |
|---|---|---|---|---|---|---|---|---|---|
| U | 2.6 | 0.32 | 8.12 | 106 | + | + | No (small) | some sinking | No |
| V | 3.0 | 0.37 | 8.10 | 111 | - | - | Yes | ,, | ,, |
| W | 3.4 | 0.42 | 8.09 | 114 | - | - | ,, | ,, | ,, |

Types I — L and T — W were comparative.

NOTES: ++: very good, +: good, —: bad.

g: characteristic of sole fiber, h: tensile strength (Kg/cm²),

i: scattering, j: mixing characteristic of fiber, k: speed of dispersion,

l: fiber ball formation, m: dispersion, n: bending of the fibers.

It can be seen from Table 2 that W should be at least around 1,5 mm as an absolute value which relates to the smooth surface. If the area of the smooth surface were too small, the fluidity (dispersion) would be impaired. When W is 1,5 mm, the area of the smooth surface is around 30 mm² if the fiber has the minimum of the specified length, and the contacting resistance of the fibers is made preferable. If W were less than 1,5 mm, the absolute value of t would be reduced due to the flatness index in response thereto, and therefore the rigidity is lowered so that the fiber becomes weak and tends to bending or breaking. The surface area is reduced so that the adhesion to the concrete becomes insufficient and the tensile strength is also insufficient. For avoiding these problems, it is necessary that t should be at least 0,2 mm as is seen from Table 2. Therefore, the lower limit of W is about 1,5 mm and the lower limit of t is about 0,2 mm.

It can be seen from Table 2 that the maximum value of W should be about 2,5 mm. If W is made large and t is made thick, the tensile strength becomes high, but the weight is increased due to increasing of the cross sectional area, and accordingly the admixed proportion of fibers is to be reduced so that the desired reinforcing effect can not be obtained. If the amount of admixed fibers were increased to improve the reinforcing effect, clods would be formed at supplying into the concrete and the fibers settle down during mixing. Further, the production facilities must be large scaled including the milling cutter, and the tools are expensive because of the required strength, so that the production custs are high.

M, N, P, Q, R, s have W between 1,5 to 2,5 mm and t between 0.2 to 0.3 mm, and the fibers are smooth in fluidity due to the flat shape balanced in the smooth surface and the rough face. The rigidity of these fibers can be increased without changing the cross sectional area, and the spring property is as that of a leaf spring. Thus, the fibers return to the original shape even if a bending moment acts on them while performing the mixture, and the tensile strength of the fibers is high.

Example

Steel fibers as shown in Fig. 5 were obtained from a continuously cast slab of low carbon steel of the chemical composition mentioned above. The fibers of the same number were mixed into the concrete under the condition of the volume fraction of the steel fibers in the concrete being 1% and the water cement ratio being 50%, and concrete test pieces of 10 × 10 × 40 cm were made. The fine aggregate percentage (sand/total aggregates) was 57%, the maximum size of the rough aggregates (crushed stones) was 15 mm, and the slump was 8 ± 1 cm. Table 3 shows the test results of the bending strength and the fiber property at breaking.

6

TABLE 3

| | | L (mm) | W (mm) | t (mm) | N | o | q | r |
|---|---|---|---|---|---|---|---|---|
| I | | 30 | 2.0 | 0.25 | 8.0 | 97 | No bending | Invention |
| | | 40 | 2.0 | 0.25 | 8.0 | 102 | ,, | ,, |
| | | 50 | 2.0 | 0.25 | 8.0 | 104 | Bending | Comparative |
| | | 15 | 2.0 | 0.25 | 8.0 | 85 | No bending | ,, |
| II | | 30 | 1.6 | 0.2 | 8.0 | 96 | No bending | Invention |
| | | 30 | 2.4 | 0.3 | 8.0 | 95 | ,, | ,, |
| | | 30 | 2.0 | 0.25 | 8.0 | 98 | ,, | ,, |
| III | | 30 | 1.3 | 0.25 | 5.2 | 91 | No bending | Comparative |
| | | 30 | 2.6 | 0.25 | 10.4 | 92 | ,, | ,, |
| | | 30 | 3.2 | 0.25 | 12.8 | 90 | Bending | ,, |
| IV | | 30 | 2.0 | 0.38 | 5.2 | 89 | No bending | Comparative |
| | | 30 | 2.0 | 0.19 | 10.4 | 90 | Bending | ,, |
| | | 30 | 2.0 | 0.16 | 12.8 | 88 | ,, | ,, |

NOTES:   o: bending strength ($kg/cm^2$) of test piece,  q: property of fiber,  r: kinds.

In Table 3, I shows the effect of the length L, II shows the effect of W/t, III shows the effect of W, and IV shows the effect of t, respectively. If the length L were not proper, the balance of the strength and the workability would be inferior though the other conditions are satisfied. Similarly, if W/t, W and t were outside of the ranges taught by the invention, both of the mentioned desired properties would be impaired. Being within the scope of the invention, said two would be superior.

**Claims**

1. Steel fiber for reinforcing concrete, produced by directly cutting a steel block by means of a rotary cutting machine having a plurality of cutting edges, the axial direction of the steel fiber being normal to the cutting direction, characterized in that, the steel fiber is flat in shape so that it satisfies the following conditions:

L = 20 to 40 mm
W = 1.5 to 2.5 mm
t = 0.2 to 0.3 mm, and
N = W/t = 7 to 9,

wherein L is the length of the fiber, W is the width of the fiber, t is the thickness of the fiber, and N is the flatness index.

2. Steel fiber as claimed in claim 1, wherein the steel fiber is crescent in a cross section normal to the length dimension, and has a base face (1) which is smooth while the remaining surface portions (2) are rough as pear skin.

3. Steel fiber as claimed in claim 1, wherein the steel fiber has a plurality of wrinkles (3) running along the length direction of the fiber and has mountain shape in cross section made by said wrinkles (Fig. 4).

4. Steel fiber as claimed in claim 1, 2 or 3, wherein the steel fiber is twisted in the length direction of the fiber (Fig. 5).

## Patentansprüche

1. Stahlfaser zur Armierung von Beton, die durch direktes Schneiden eines Stahlblocks mittels einer umlaufenden Schneidvorrichtung hergestellt ist, welche eine Mehrzahl von Schneidkanten aufweist, wobei die Axialrichtung der Stahlfaser senkrecht zur Schneidrichtung verlaüft, dadurch gekennzeichnet, daß die Stahlfaser flach ausgebildet ist, so daß sie die folgenden Bedingungen erfüllt:

L = 20 bis 40 mm
W = 1,5 bis 2,5 mm
t = 0,2 bis 0,3 mm und
N = W/t = 7 bis 9,

wobei L die Länge der Faser, W die Breite der Faser, t die Dicke der Faser und N der Flachheitsindex ist.

2. Stahlfaser nach Anspruch 1, dadurch gekennzeichnet, daß sie in einem senkrecht zu ihrer Länge liegenden Querschnitt mondförmig ausgebildet ist und eine Basisfläche (1) aufweist, die glatt ist, während die verbleibenden Flächenabschnitte (2) rauh wie Birnenhaut sind.

3. Stahlfaser nach Anspruch 1, dadurch gekennzeichnet, daß sie eine Mehrzahl von Wellen (3) aufweist, die in Längsrichtung der Faser verlaufen, und daß sie, hervorgerufen durch die Wellen, im Querschnitt eine gebirgeförmige Gestalt besitzt (Figur 4).

4. Stahlfaser nach Anspruch 1, 2 oder 3, dadurch gekennzeichnet, daß sie in Längsrichtung der Faser verdrillt ist (Figur 5).

## Revendications

1. Fibre d'acier pour armer du béton, produite par découpage direct d'un bloc d'acier au moyen d'une machine à découper rotative comportant une pluralité de tranchants, la direction axiale de la fibre d'acier étant perpendiculaire à la direction de découpage, caractérisée en ce que la fibre d'acier a une forme plate, de façon à satisfaire aux conditions suivantes:

L = 20 à 40 mm;
W = 1,5 à 2,5 mm;
t = 0,2 à 0,3 mm; et
N = W/t = 7 à 9,

où L est la longueur de la fibre, W est la largeur de la fibre, t est l'épaisseur de la fibre et N est le rapport d'aplatissement.

2. Fibre d'acier selon la revendication 1, pour laquelle ladite fibre d'acier a une forme de croissant dans une section droite perpendiculaire à la dimension longitudinale, et comporte une face de base (1) lisse, tandis que les portions de surface restantes (2) ont la rugosité de la peau de poire.

3. Fibre d'acier selon la revendication 1, pour laquelle ladite fibre d'acier comporte une pluralité de sillons (3) dirigés suivant la direction de la longueur de la fibre, et en ce qu'elle présente une forme ondulée (forme de montagne) en section droite, due aux sillons (figure 4).

4. Fibre d'acier selon la revendication 1, 2 ou 3, pour laquelle ladite fibre d'acier est torsadée dans la direction de la longueur de la fibre (figure 5).

# FIG_1

L

2

# FIG_2

2

t

1

W

# FIG_3

3

# FIG_4

3  3  2

t

1

W

# FIG_5

3

4  1